(19) Europäisches Patentamt / European Patent Office / Office européen des brevets

(11) **EP 2 885 881 B1**

(12) **EUROPEAN PATENT SPECIFICATION**

(45) Date of publication and mention of the grant of the patent:
**01.01.2020 Bulletin 2020/01**

(51) Int Cl.:
*H04B 7/024* (2017.01)  *H04B 7/06* (2006.01)
*H04B 17/12* (2015.01)

(21) Application number: **13826584.8**

(22) Date of filing: **19.08.2013**

(86) International application number:
**PCT/IB2013/002236**

(87) International publication number:
**WO 2014/030065 (27.02.2014 Gazette 2014/09)**

(54) **METHOD OF OPTIMIZING RADIO LINK MONITOR WINDOW PARAMETER IN WIRELESS HETEROGENEOUS COMMUNICATION NETWORK**

VERFAHREN ZUR OPTIMIERUNG DER PARAMETER EINES FUNKVERBINDUNGSKONTROLLFENSTERS IN EINEM DRAHTLOSEN HETEROGENEN KOMMUNIKATIONSNETZWERK

PROCÉDÉ D'OPTIMISATION DE PARAMÈTRE DE FENÊTRE DE SURVEILLANCE DE LIAISON RADIO DANS UN RÉSEAU DE COMMUNICATION HÉTÉROGÈNE SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.08.2012 CN 201210297045**

(43) Date of publication of application:
**24.06.2015 Bulletin 2015/26**

(73) Proprietor: **Alcatel Lucent**
**91620 Nozay (FR)**

(72) Inventors:
• **SUN, Huan**
**201206 Shanghai (CN)**
• **ZHAO, Yan**
**201206 Shanghai (CN)**
• **SUN, Fanglei**
**201206 Shanghai (CN)**

(74) Representative: **DREISS Patentanwälte PartG mbB**
**Postfach 10 37 62**
**70032 Stuttgart (DE)**

(56) References cited:
**EP-A2- 2 439 981    WO-A2-2012/020312**

• **ALCATEL-LUCENT SHANGHAI BELL ET AL: "On handling of timing misalignment and antenna calibration", 3GPP DRAFT; R1-113333 HANDLING OF TIMING MISALIGNMENT AND ANTENNA CALIBRATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Zhuhai; 20111010, 6 October 2011 (2011-10-06), XP050538596, [retrieved on 2011-10-06]**

**Description**

**Field of the invention**

The present disclosure relates to a wireless heterogeneous communication network and particularly to a method of optimizing a radio link monitor window parameter in a wireless communication network.

**Background of the invention**

In a space division multiplexed system, multiple cells coordinate to perform downlink transmission, which can compress the Multi-User Interference (MUI) within a coordinated cell set and further can convert an original inter-cell interference channel within a multi-point coordinated transmission set into a user's effective channel, so the multi-point coordinated transmission scheme can significantly improve the performance of the cellular system. In a time division multiplexed system, a performance gain as a result of downlink multi-point coordinated transmission can contribute to an improvement in the accuracy of channel state information exploiting channel reciprocity of the system.

Although there exists some radio frequency parameter mismatch between the eNB and user equipment sides, which can be generally denoted as $\alpha\exp(-j\beta)$, where $\alpha$ denotes an amplitude offset and $\beta$ denotes a phase offset, the technology of antenna self-calibration per cell in the prior art can ensure that these offsets can satisfy $\alpha \leq 0.7dB$ and $\beta \leq 5°C$, and also guarantee a larger single-cell MU-MIMO performance gain than that of single-cell SU-MIMO.

In a scenario of downlink multi-point coordinated transmission in the space division multiplexed system, multiple eNBs coordinate for downlink transmission, and a concatenated channel from multiples cells to a single user shall be achieved as perfectly as possible. We assume that after self-calibration per cell, each cell can perfectly collect such a channel between a given user equipment and the cell itself that is a segment of the whole multi-point coordinated transmission channel. After getting all the channel segments of the given user equipment, all the segments are integrated into a multi-point coordinated transmission high-dimension concatenated channel. However, due to the presence of some parameter shift between antenna arrays of multiple different eNBs, the achieved multi-point coordinated transmission downlink channel may not be the original downlink transmission channel. If the eNBs directly use these channel state information to design a pre-coding vector or matrix for downlink data transmission, the multi-point coordinated transmission performance gain will be significantly degraded.

A document WO 2012/020312 describes a method and device of obtaining enhanced CQI (Channel Quality Indicator), wherein the method performs CQI calculation utilizing demodulated reference signal.

**Summary of the invention**

In view of the foregoing considerations, if the offset between the antenna arrays across the eNBs can be completely or partially compensated, the system performance loss will be lowered. Thus calibration of the parameter offset between the antenna arrays is a crucial step of space division multiplexed downlink multi-point coordinated transmission. For this reason, the invention proposes a method of calibrating antenna arrays between eNBs.

According to a first aspect of the invention, there is proposed a method, in a first base station of a wireless communication network, according to claim 1, of calibrating an offset of an antenna array of the first base station relative to an antenna array of a second base station in the wireless communication network, wherein the first base station and the second base station perform multi-point coordinated transmission, and the method includes the steps of: dividing a whole parameter offset range into a plurality of segments according to the requirement of calibration precision and assigning a feature value for each segment; compensating uplink channel state information according to the feature value assigned to one of the plurality of segments in a predetermined order in a first cycle; designing a pre-coding vector or matrix for downlink data transmission according to a compensation result, pre-coding downlink data and subsequently transmitting the downlink data to a user equipment cooperatively with the second base station, wherein the user equipment is served by the first base station and the second base station through multipoint coordinated transmission and the user equipment is currently idle; and judging whether all the segments of the parameter offset range have been traversed, and if a judgment result is negative, then repeating the foregoing steps; or if the judgment result is positive, then ending the first cycle.

Additionally the predetermined order is to make each of the plurality of segments traversed at least once.

In an embodiment of the invention, the method further includes the steps of: in a second cycle, judging whether a first period has been reached after the last first cycle was started, and if so, then restarting the first cycle, wherein the first period is larger than or equal to a period required for completing the first cycle; and judging whether a second period has been reached after the first cycle was started for the first time, and if so, then ending the first cycle and/or the second cycle.

In an embodiment where the second base station determines the offset of the antenna array of the first base station relative to the antenna array of the second base station, the method according to the invention further includes the step of: sending first information to the second base station, the first information indicating the predetermined order; and possibly further includes the step of: sending second information to the second base station, the second information indicating the plurality of segments into which the whole parameter offset range is divided and the feature value assigned for each segment in the first base station.

According to the first aspect of the invention, the first base station determines the offset of the antenna array of the first base station relative to the antenna array of the second base station, therefore the method according to the invention further includes the steps of: receiving a related channel quality indication feedback from the user equipment; and determining an offset range of the antenna array of the first base station relative to the antenna array of the second base station according to the channel quality indication feedback.

According to the first aspect of the invention, the step of determining the offset range according to the channel quality indication feedback includes the sub-steps of: calculating statistics of channel quality indicators for the respective feature values at a current instant; determining the feature value corresponding to the highest one of the statistics; calculating for each feature value a probability that the feature value is a feature value corresponding to the highest one of channel quality indicators at a specific instant; and determining a parameter offset range corresponding to the feature value with the highest probability.

In an embodiment of the invention, after the step of determining the offset range according to the channel quality indication feedback, the method further includes the steps of: further dividing the determined offset range into a plurality of segments according to the requirement of calibration requirement and assigning a feature value for each segment; compensating uplink channel state information according to the feature value assigned to one of the plurality of segments in a predetermined order in a third cycle; designing a pre-coding vector or matrix for downlink data transmission according to a compensation result, pre-coding downlink data and subsequently transmitting the downlink data to a user equipment cooperatively with the second base station, wherein the user equipment is served by the first base station and the second base station through multipoint coordinated transmission and the user equipment is currently idle; and judging whether all the segments of the parameter offset range have been traversed, and if a judgment result is negative, then repeating the foregoing steps; or if the judgment result is positive, then ending the third cycle.

According to a second aspect of the invention, there is proposed a method, in a second base station of a wireless communication network, according to claim 9, of calibrating an offset of an antenna array of a first base station in the wireless communication network relative to an antenna array of the second base station, wherein the first base station and the second base station perform multipoint coordinated transmission, and a whole parameter offset range is divided into a plurality of segments according to the requirement of calibration precision in the first base station; and the method includes the steps of: in a fourth cycle, designing a pre-coding vector or matrix for downlink transmission according to uplink channel state information, pre-coding downlink data, and subsequently transmitting the downlink data to a user equipment cooperatively with the first base station, wherein the user equipment is served by the first base station and the second base station through multipoint coordinated transmission, and the user equipment is currently idle; and judging whether the number of times that the foregoing step is repeated has reached a predetermined number of times related to the number of the plurality of segments, and if a judgment result is negative, then repeating the foregoing steps, or if the judgment result is positive, then ending the fourth cycle.

With the solution of the invention, a feedback of a user equipment in an idle state can be utilized, and an offset parameter of antenna arrays between base stations can be obtained and the base stations for multi-point coordinated transmission can be assisted in obtaining more accurate downlink channel state information without increasing a load of the system. Accordingly the base stations for multi-point coordinated transmission can make full use of the downlink channel state information to design pre-coding with good matching performance to thereby improve the performance of downlink multi-point coordinated transmission in the time division multiplexed system.

The respective aspects of the invention will become more apparent from the following description of particular embodiments.

## Brief description of drawings

Other features, objects and advantages of the invention will become more apparent upon review of the following detailed description of non-limiting embodiments taken with reference to the drawings in which:

Fig.1 illustrates a network topology diagram of a wireless communication network according to an embodiment of the invention;
Fig.2 illustrates a flow chart of a method according to an embodiment of the invention;
Fig.3 illustrates a flow chart of the method of a second cycle and a fifth cycle in Fig.2;
Fig.4 illustrates a flow chart of the method of a first cycle and a fourth cycle in Fig.3;
Fig.5 illustrates particular steps of determining an offset range of an antenna array according to channel quality indicators in Fig.1; and
Fig.6 illustrates a flow of a method according to another embodiment of the invention.

Throughout the various figures in the drawings, identical or similar reference numerals denote identical or similar devices (modules) or steps.

## Detailed description of embodiments

In the following detailed description of preferred embodiments, reference will be made to the drawings constituting a part of the specification. The appended drawings illustrate particular embodiments in which the invention can be practiced by way of an example. The exemplary embodiments are not intended to exhaust all the embodiments of the invention. As can be appreciated, other embodiments can be made and structural or logical modifications can be made without departing the scope of the invention. Therefore the following detailed description is not intended to be limiting in any way, and the scope of the invention shall be defined as in the appended claims.

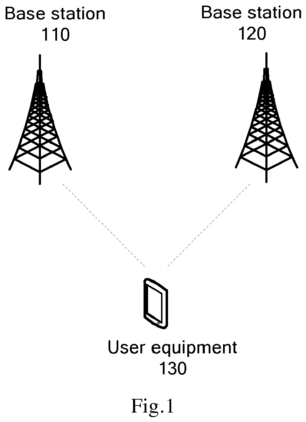

Fig.1 illustrates a network topology diagram of a wireless communication network according to an embodiment of the invention.

The wireless communication network 100 illustrated in Fig.1 includes a first base station 110, a second base station 120 and a user equipment 130. Those skilled in the art can appreciate that Fig.1 only illustrates network elements necessary for understanding of the invention, and the wireless communication network 100 can further include other network elements.

In the embodiment illustrated in Fig.1, the first base station 110 and the second base station 120 coordinate for multi-point coordinated transmission to serve the user equipment 130. The downlink channel of the user equipment 130 is consisted of two segments including one segment from the first base station 110 to the user equipment 130 and the other segment from the second base station 120 to the user equipment 130.

The antenna offset in the antenna array of the first base station 110 can be determined as in the prior art, and likewise the antenna offset in the antenna array of the second base station 120 can also be determined as in the prior art, but a method, which can be supported by an existing standard, of calibrating the antenna array of the first base station relative to the antenna array of the second base station is absent in the prior art.

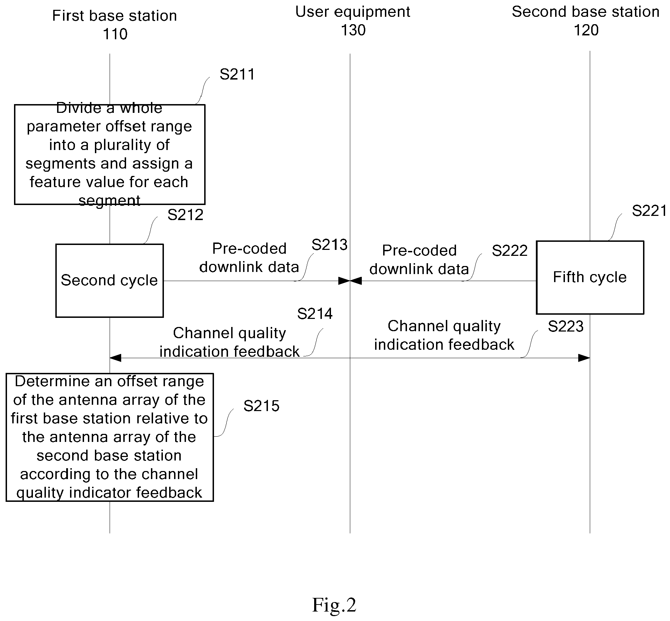

The method of calibrating the offset of antenna arrays between base stations as proposed according to the invention will be described below according to Fig.2 to Fig.6. It is assumed in the following description that each base station has been self-calibrated before the offset of the antenna arrays between the base stations is calibrated. And it is assumed that the result of self-calibration of each cell is accurate, which means that calibration in one antenna array has been done and the remaining task is to calibrate the offset between different antenna arrays.

In an embodiment where a plurality of cells perform coordinated transmission, antenna arrays can be calibrated between every two of the plurality of cells to thereby calibrate the antenna arrays between the plurality of cells, and the method of the invention will be described below taking two cells performing coordinated transmission as example.

In an example where two cells perform multi-point coordinated transmission, it is assumed $H_i^{UL}$ and $H_i^{DL}$ are the $1 \times M$ vectors respectively representing uplink and downlink channels between $M$ transmit antennas of the i-th cell and a single antenna of a user equipment receiving multi-point coordinated transmission. The parameter offset of a radio channel consisted of antenna arrays of the two cells can be expressed as:

$$\sigma \cdot e^{j\phi} = mean\left(\left(h_1^{UL} \cdot * h_2^{DL}\right) / \left(h_1^{DL} \cdot * h_2^{UL}\right)\right),$$

Where $\sigma$ is a power offset or an amplitude offset, and $\varphi$ is a phase offset. The cells of multi-point coordinated transmission design a pre-coding vector or matrix for downlink data transmission based on the assumed pair of parameters "$\sigma$, $\varphi$".

Fig.2 illustrates a flow chart of a method according to an embodiment of the invention.

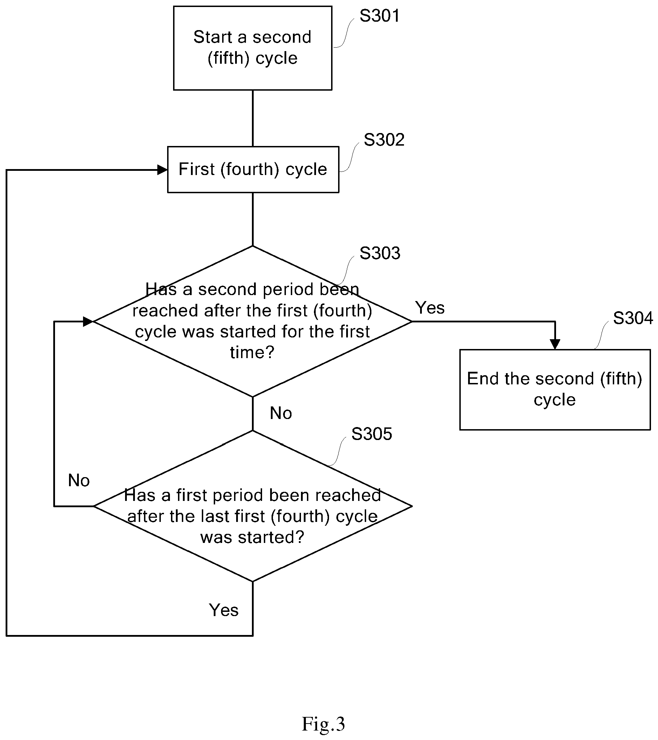

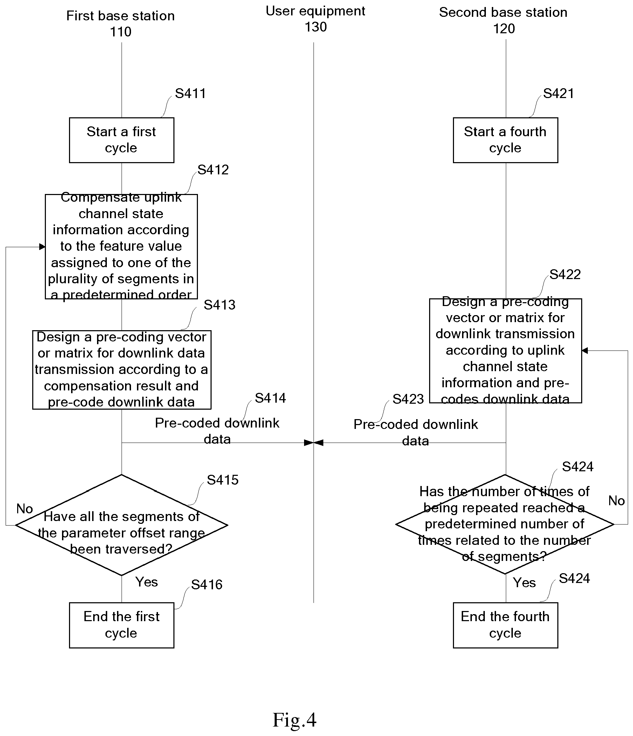

In the step S211 of the method, the first base station 110 divides a whole parameter offset range into a plurality of segments according to the requirement of calibration precision and assigns a feature value for each segment, and performs a second cycle in the subsequent step S212 of the method, where particular steps of the second cycle will be further described in Fig.3 and Fig.4. In the step S213 of the method, the first base station 110 transmits pre-coded downlink data to the user equipment 130, receives a related channel quality indicator feedback from the user equipment 130 in the subsequent step S214 of the method, and determines an offset range of the antenna array of the first base station relative to the antenna array of the second base station according to the received related channel quality indicator feedback in the subsequent step S215 of the method.

Specifically in the step S11 of the method, if there is a possible phase offset variation range $\overline{\varphi} \subseteq (\varphi_1, \varphi_2)$, then the search subspace can be partitioned into $\overline{\varphi} \subseteq (\varphi_1, \Delta\varphi, \varphi_2)$, where $\Delta\varphi$ is the search step determined by the requirement of calibration precision, e.g., 10 degrees. The search subspace for amplitude is defined as $\overline{\sigma} = [\sigma_0 : \Box\sigma, \sigma_1]$dB, where $\Box\sigma$ is the search step determined by the requirement of calibration precision, e.g., 0.1 dB.

The feature values assigned for the respective segments will be used as test points in the subsequent test cycle. In an embodiment of the invention, candidate test points are as depicted in Table 1 below:

Table 1: Candidate test points

| Test Index | Phase offset (degree) | | | | | |
|---|---|---|---|---|---|---|
| Amplitude offset (dB) | $(0,0)_1$ | $(0,10)_2$ | $(0,20)_3$ | $(0,40)_4$ | $(0,80)_5$ | $(0,180)_6$ |
| | $(0.2,0)_7$ | $(0.2,10)_8$ | $(0.2,20)_9$ | $(0.2,.40)_{10}$ | $(0.2,80)_{11}$ | $(0,180)_{12}$ |

Fig.3 and Fig.4 illustrates the steps of the method of the second cycle in Fig.1.

As illustrated in Fig.3, the second cycle starts from the step S301 of the method and goes into a first cycle in the step S302 of the method.

As illustrated in Fig.4, the first cycle starts from the step S411 of the method. In the subsequent step S412 of the method, the first base station 110 compensates uplink channel state information according to the feature value assigned to one of the plurality of segments in a predetermined order. The predetermined order is to make each of the plurality of segments traversed at least once. The 12 test points indexed by 1 to 12 as depicted in Table 1 can be tested respectively once in an ascending order of the indexes of the test points, or the respective test points can be traversed once in a descending order of the indexes of the test points or even in any order. In an embodiment of the invention, the test point indexed by 1 is tested in a downlink transmission time interval of the first sub-frame, the test point indexed by 10 is tested in a downlink transmission time interval of the second sub-frame, ... ..., until all the 12 test points are tested in 12 sub-frames. This means that the periodicity of the first cycle is 12 sub-frames (6 ms). In an embodiment of the invention, the first cycle is completed in a coherent period, the coherent period being related to the speed of the user equipment 130, to the frequency of the carrier frequency signal and other factors.

In the step S413 of the method, the first base station 110 designs a pre-coding vector or matrix for downlink data transmission according to a compensation result, pre-codes downlink data and subsequently transmits the downlink data to the user equipment 130 cooperatively with the second base station 120 in the subsequent step S414 of the method, where the user equipment 130 is currently idle.

In the step S415 of the method, the first base station 110 judges whether all the segments of the parameter offset range have been traversed, and if a judgment result is negative, then the steps S412 to S415 are repeated; or if the judgment result is positive, then the first cycle is ended in the step S416 of the method.

Back to the step S303 of the method in Fig.3 after the first cycle is ended, the first base station 110 judges whether a second period has been reached after the first cycle was started for the first time, and if so, then the second cycle is ended in the step S304 of the method; or if a judgment result is negative, then it is further judged in the step S305 of the method whether a first period has been reached after the last first cycle was started, and if so, then the flow goes back to the step S302 of the method where the first cycle is restarted, wherein the first period is larger than or equal to a period required for completing the first cycle; or if a judgment result is negative, then the flow goes back to the step S303 of the method.

As can be appreciated, the second cycle has the first cycle repeated or cycled as a whole, and it can be considered that the first cycle is an inner cycle and the second is an outer cycle. The steps S303 and S305 of the method are not necessary for an implementation of the invention, and their orders can be altered or even these steps can be omitted. Advantages of adding the second cycle are an increased number of times that the first cycle is performed and a large number of obtained test results to thereby make a statistics of the test results closer to a real channel quality.

The following description will be made back to the steps of the method performed at the second base station 120 side. In the step S221 of the method, the second base station performs a fifth cycle, and the steps of the fifth cycle will be further described in Fig.3 and Fig.4. In the step S222 of the method, the second base station 120 transmits pre-coded downlink data to the user equipment 130, and receives a related channel quality indicator feedback from the user equipment 130 in the step S223 of the method.

Fig.3 and Fig.4 illustrate the steps of the method of the fifth cycle in Fig. 2.

As illustrated in Fig.3, the fifth cycle includes the same steps of the method in the second cycle, and a repeated description thereof will be omitted here. Those skilled in the art can appreciate that since the first base station 110 and the second base station 120 perform multi-point coordinated transmission, the fifth cycle has the same periodicity as that of the second cycle.

As illustrated in Fig.4, the fourth cycle starts from the step S421 of the method. In the subsequent step S422 of the method, the second base station 120 designs a pre-coding vector or matrix for downlink transmission according to uplink channel state information, pre-codes downlink data, and transmits the pre-coded downlink data to the user equipment 130 in the step S423 of the method.

Those skilled in the art can appreciate that the steps S414 and S423 of the method are performed cooperatively by the first base station 110 and the second base station 120 in the same timeslot.

In the step S424 of the method, the second base station 120 judges whether the number of times that the step S422 is repeated has reached a predetermined number of times related to the number of test points, and if a judgment is negative, then the steps S422 to S424 are repeated; or if the judgment result is positive, then the fourth cycle is ended.

Those skilled in the art can appreciate that the fourth cycle has the same periodicity as that of the first cycle except that in the fourth cycle, the second base station 120 does not compensate the uplink channel state information and the signal transmitted from the second base station can be regarded as a reference signal. The signal transmitted from the second base station can be expressed as:

$$\frac{\left(h_1^{ul}\right)^H}{\sqrt{\left|h_1^{ul}\right|^2 + \left|h_2^{ul}\right|^2}} \cdot s$$

In the first cycle, the first base station 110 compensates the uplink channel state information, and the signal transmitted therefrom can be expressed as:

$$e^{-j\varphi_t} \frac{\left(h_2^{ul}\right)^H}{\sqrt{\left|h_1^{ul}\right|^2 + \left|\sigma_t h_2^{ul}\right|^2}} \cdot s \,,$$

where the value of $(\sigma_t, \varphi_t)$ is the test point depicted in Table 1. The user equipment will feed back a related channel quality indicator for each test point.

In the embodiment illustrated in Fig.2, the first base station 110 receives channel quality indicator information fed back from the user equipment in the step S214 of the method. Thereafter in the step S215 of the method, the first base station determines an offset range of the antenna array of the first base station relative to the antenna array of the second base station according to the channel quality indicator feedback.

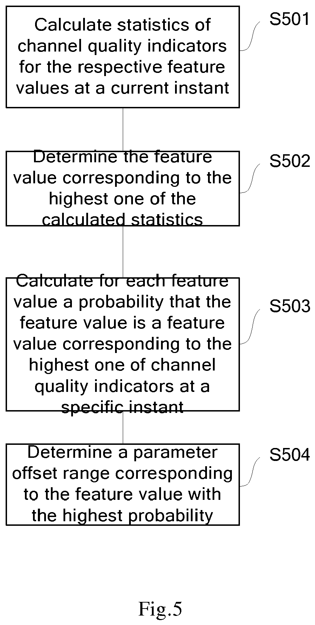

Specifically, Fig.5 illustrates particular steps of determining an offset range of the antenna array according to the channel quality indicators in Fig.1.

Firstly in the step S501 of the method, the first base station 110 calculates statistics of channel quality indicators for the respective feature values at a current instant. The statistic can be a statistic average or a statistic sum or other values that can occur to those skilled in the art. The following description will be made taking a statistic being a statistic average as an example.

The statistic average of a channel quality indicator can be expressed as:

$$f\left(\tau, i\right) = \frac{1}{\tau}\sum_{l=1}^{\tau} C_l^i \,,$$

where $\tau$ denotes the cycle index of the outer cycle, that is, the number of times that the fist cycle is repeated, $i$ stands for the index of the test point, and $C_l^i$ is the value of a user fed-back channel quality indicator with respect to the $i$-th test point in the $l$-th periodicity of the outer cycle.

Thereafter in the step S502 of the method, the feature value corresponding to the highest one of the calculated statistics is determined. That is, such a test point is determined that can assist the user equipment in attaining better performance and recorded in a judgment result of the $\tau$-th cycle.

$$\kappa = \max\left\{ f_i\left(\tau_i\right) \right\}$$

$$\Pi\left(\tau,\kappa\right)=1$$

In the step S503 of the method, for each feature value, such a probability is calculated that the feature value is a feature value corresponding to the highest one of channel quality indicators at a specific instant. When the outer cycle is indexed by $\tau$, the probability that the channel quality indicator of the i-th test point is optimum is expressed as:

$$\eta_i = \frac{\sum_{l=1}^{\tau}\Pi\left(l,i\right)}{\tau}.$$

A test point with the highest probability of demonstrating better performance is derived statistically from the results. And in the step S504 of the method, a parameter offset range corresponding to the feature value with the highest probability is determined as the offset range of the antenna array of the first base station relative to the antenna array of the second base station as determined according to the method of the invention.

In an embodiment of the invention, the determined range can be further divided, and the outer cycle and/or the inner cycle can be repeated to thereby improve the precision of calibration and hence attain better performance.

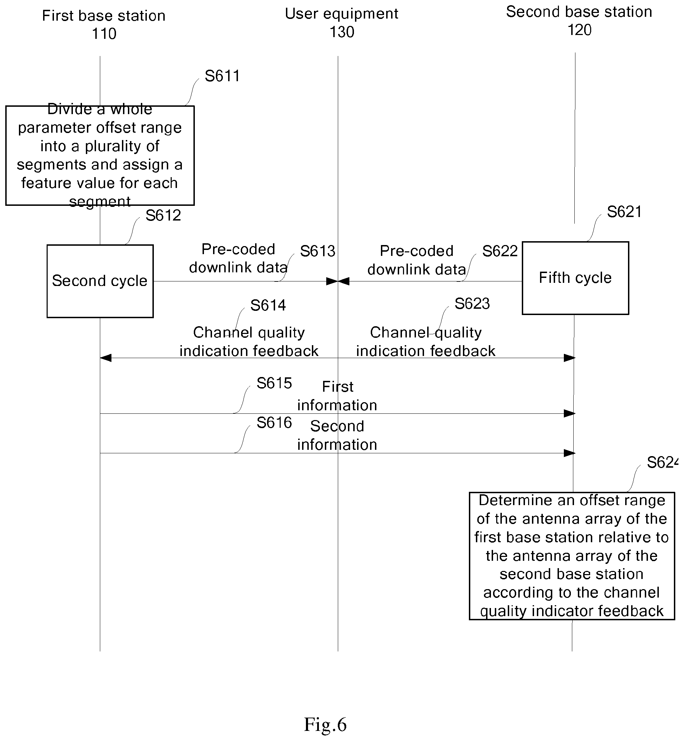

Fig.6 illustrates a flow chart of a method according to another embodiment of the invention.

The embodiment illustrated in Fig.6 differs from that illustrated in Fig.2 in that in the embodiment illustrated in Fig.6, the second base station 120 instead of the first base station 110 determines an offset range of the antenna array of the first base station relative to the antenna array of the second base station according to received channel quality indicators fed back from the user equipment

For this reason, the first base station 110 can transmit first information to the second base station 120 in the step S615 of the method to indicate a predetermined order in which respective test points are tested in a first cycle in the first base station 110. Those skilled in the art can appreciate that the predetermined order can alternatively be preconfigured in the second base station, and thus the step S615 of the method can be omitted.

Moreover the first base station 110 can send second information to the second base station 120 in the step S616 of the method, the second information indicating the plurality of segments into which the whole parameter offset range is divided and the feature value assigned for each segment in the first base station. Similarly the second information can alternatively be preconfigured in the second base station 120, and thus the step S616 of the method can also be omitted.

The step S624 of the method is similar to the step S215 of the method described above with respect to Fig.2, and a repeated description thereof will be omitted here. Alike it can include the steps of the method described with respect to Fig.5.

Those skilled in the art shall appreciate that the invention apparently will not be limited to the foregoing exemplary embodiments and can be embodied in other specific forms without departing from the scope of the invention as defined by the appended claims. Accordingly the embodiments shall be construed anyway to be exemplary and non-limiting. Moreover apparently the term "comprising" will not preclude another element(s) or step(s), and the term "a" or "an" will not preclude plural. A plurality of elements stated in an apparatus claim can alternatively be embodied as a single element. The terms "first", "second", etc., are intended to designate a name but not to suggest any specific order.

## Claims

1. A method, in a first base station (110) of a wireless communication network (100), of calibrating an offset of an antenna array of the first base station (110) relative to an antenna array of a second base station (120) in the wireless communication network (100), the method comprising the steps of: a. dividing (S211) a whole parameter offset range into a plurality of segments according to the requirement of calibration precision and assigning a feature value for each segment; b. compensating (S412) uplink channel state information according to the feature value assigned to one of the plurality of segments in a predetermined order in a first cycle; c. designing (S413) a pre-coding vector or matrix for downlink data transmission according to a compensation result, pre-coding downlink data and subsequently transmitting the downlink data to a user equipment (130) cooperatively with the second base station (120), wherein the user equipment (130) is served by the first base station (110) and the second base station (120) through multipoint coordinated transmission and the user equipment (130) is currently idle; and d. judging (S415) whether all the segments of the parameter offset range have been traversed, and if a judgment result is negative, then repeating the steps b-d; or if the judgment result is positive, then ending the first cycle, wherein after the step d, the method further comprises the steps of: - receiving a related channel quality indication feedback from the user equipment (130); and - determining an offset range of the antenna array of the first base station (110) relative to the antenna array of the second base station (120) according to the channel quality indication feedback, wherein the step of determining the offset range according to the channel quality indication feedback comprises the substeps of: - calculating (S501) statistics of channel quality indicators for the respective feature values at a current instant; - determining (S502) the feature value corresponding to the highest one of the statistics; - calculating (S503) for each feature value a probability that the feature value is a feature value corresponding to the highest one of channel quality indicators at a specific instant; and - determining (S504) a parameter offset range corresponding to the feature value with the highest probability.

2. The method according to claim 1, wherein the predetermined order is to make each of the plurality of segments traversed at least once.

3. The method according to claim 1, wherein after the step d, the method further comprises the steps of: - in a second cycle, judging (S305) whether a first period has been reached after the last first cycle was started, and if so, then restarting the first cycle, wherein the first period is larger than or equal to a period required for completing the first cycle.

4. The method according to claim 3, wherein after the step d, the method further comprises the steps of: - judging (S303) whether a second period has been reached after the first cycle was started for the first time, and if so, then ending the first cycle.

5. The method according to claim 1, wherein the method further comprises the step of: - sending (S615) first information to the second base station (120), the first information indicating the predetermined order in the step b.

6. The method according to claim 5, wherein the method further comprises the step of: - sending (S616) second information to the second base station (120), the second information indicating the plurality of segments into which the whole parameter offset range is divided and the feature value assigned for each segment in the first base station (110).

7. The method according to any of the preceding claims, wherein after the step of determining the offset range according to the channel quality indication feedback, the method further comprises the steps of: m. further dividing the determined offset range into a plurality of segments according to the requirement of calibration precision and assigning a feature value for each segment; n. compensating uplink channel state information according to the feature value assigned to one of the plurality of segments in a predetermined order in a third cycle; o. designing a pre-coding vector or matrix for downlink data transmission according to a compensation result, pre-coding downlink data and subsequently transmitting the downlink data to a user equipment (130) cooperatively with the second base station (120), wherein the user equipment (130) is served by the first base station (110) and the second base station (120) through multipoint coordinated transmission and the user equipment (130) is currently idle; and p. judging whether all the segments of the parameter offset range have been traversed, and if a judgment result is negative, then repeating the steps n-p; or if the judgment result is positive, then ending the third cycle.

8. The method according to claim 1, wherein the first cycle is completed in a coherent period, the coherent period being related to a speed of the user equipment (130) and to a frequency of a carrier frequency signal.

9. A method, in a second base station (120) of a wireless communication network (100), of calibrating an offset of an antenna array of a first base station (110) in the wireless communication network (100) relative to an antenna array of the second base station (120), wherein the first base station (110) and the second base station (120) perform multipoint coordinated transmission, and a whole parameter offset range is divided into a plurality of segments according to the requirement of calibration precision in the first base station (110); and the method comprises the steps of: A. in a fourth cycle, designing a pre-coding vector or matrix for downlink transmission according to uplink channel state information, pre-coding downlink data, and subsequently transmitting the downlink data to a user equipment (130) cooperatively with the first base station (110), wherein the user equipment (130) is served by the first base station (110) and the second base station (120) through multipoint coordinated transmission, and the user equipment (130) is currently idle; and B. judging whether the number of times that the step A is repeated has reached a predetermined number of times related to the number of the plurality of segments, and if a judgment result is negative, then repeating the steps A-B, or if the judgment result is positive, then ending the fourth cycle, wherein after the step B, the method further comprises the steps of receiving a related channel quality indication feedback from the user equipment (130) and - determining an offset range of the antenna array of the first base station (110) relative to the antenna array of the second base station (120) according to the channel quality indication feedback, wherein the step of determining the offset range according to the channel quality indication feedback comprises the sub-steps of: - calculating (S501) statistics of channel quality indicators for the respective feature values at a current instant; - determining (S502) the feature value corresponding to the highest one of the statistics; - calculating (S503) for each feature value a probability that the feature value is a feature value corresponding to the highest one of channel quality indicators at a specific instant; and - determining (S504) a parameter offset range corresponding to the feature value with the highest probability.

10. The method according to claim 9, wherein after the step B, the method further comprises the steps of: - in a fifth cycle, judging whether a third period has been reached after the last fourth cycle was started, and if so, then restarting the fourth cycle, wherein the third period is larger than or equal to a period required for completing the fourth cycle.

11. The method according to claim 10, wherein after the step B, the method further comprises the steps of: - judging whether a fourth period has been reached after the fourth cycle was started for the first time, and if so, then ending the fifth cycle.

12. The method according to claim 9, wherein the method further comprises the steps of: - receiving first information from the first base station (110), the first information indicating a predetermined order in which the first base station (110) cycles through the plurality of segments in a first cycle coordinated with the fourth cycle of the second base station (120); or pre-configuring the first information in the second base station (120); and - receiving second information from the first base station (110), wherein the second information indicating the plurality of segments into which the whole parameter offset range is divided and a feature value assigned for each segment in the first base station (110); or pre-configuring the second information in the second base station (120).

## Patentansprüche

1. Verfahren in einer ersten Basisstation (110) eines drahtlosen Kommunikationsnetzes (100) zum Kalibrieren eines Versatzes einer Gruppenantenne der ersten Basisstation (110) relativ zu einer Gruppenantenne einer zweiten Basisstation (120) in dem drahtlosen Kommunikationsnetz (100), wobei das Verfahren die folgenden Schritte umfasst: a. Unterteilen (S211) eines gesamten Parameterversatzbereichs in mehrere Segmente in Übereinstimmung mit der geforderten Genauigkeit der Kalibrierung und Zuweisen eines Merkmalswertes zu jedem Segment; b. Kompensieren (S412) von Aufwärtsstreckenkanal-Zustandsinformationen in Übereinstimmung mit dem Merkmalswert, der dem einen der mehreren Segmente zugewiesen worden ist, in einer vorgegebenen Reihenfolge in einem ersten Zyklus; c. Entwerfen (S413) eines Vorcodierungsvektors oder einer Vorcodierungsmatrix für eine Abwärtsstrecken-Datenübertragung in Übereinstimmung mit einem Vergleichsergebnis, Vorcodieren von Abwärtsstreckendaten und anschließend Übertragen der Abwärtsstreckendaten an ein Anwendergerät (130) in Zusammenwirkung mit der zweiten Basisstation 120), wobei das Anwendergerät (130) von der ersten Basisstation (110) und von der zweiten Basisstation (120) über eine koordinierte Mehrpunktübertragung bedient wird und das Anwendergerät (130) aktuell im Leerlauf ist; und d. Beurteilen (S415), ob alle Segmente des Parameterversatzbereichs durchlaufen worden sind, wobei dann, wenn das Beurteilungsergebnis negativ ist, die Schritte b-d wiederholt werden; oder dann, wenn das Beurteilungsergebnis positiv ist, der erste Zyklus beendet wird, wobei nach dem Schritt d das Verfahren ferner die folgenden Schritte umfasst: Empfangen einer zugehörigen Kanalqualitätsangaberückmeldung von dem Anwendergerät (130); und Bestimmen eines Versatzbereichs der Gruppenantenne der ersten Basisstation (110) relativ zu der Gruppenantenne der zweiten Basisstation (120) in Übereinstimmung mit der Kanalqualitätsangaberückmeldung, wobei der Schritt des Bestimmens des Versatzbereichs in Übereinstimmung mit der Kanalqualitätsangaberückmeldung die folgenden Unterschritte umfasst: Berechnen (S501) einer Statistik der Kanalqualitätsindikatoren für die entsprechenden Merkmalswerte zu einem momentanen Zeitpunkt; Bestimmen (S502) des Merkmalswertes in Übereinstimmung mit dem höchsten Merkmalswert der Statistik; Berechnen (S503) für jeden Merkmalswert einer Wahrscheinlichkeit, dass der Merkmalswert ein Merkmalswert ist, der dem höchsten der Kanalqualitätsindikatoren zu einem bestimmten Zeitpunkt entspricht; und Bestimmen (S504) eines Parameterversatzbereichs, der dem Merkmalswert mit der höchsten Wahrscheinlichkeit entspricht.

2. Verfahren nach Anspruch 1, wobei die vorgegebene Reihenfolge so ist, dass jedes der mehreren Segmente wenigstens einmal durchlaufen wird.

3. Verfahren nach Anspruch 1, wobei nach dem Schritt d das Verfahren ferner die folgenden Schritte umfasst: in einem zweiten Zyklus Beurteilen (S305), ob seit dem Beginn des letzten ersten Zyklus eine erste Zeitdauer erreicht worden ist, und wenn ja, erneutes Beginnen des ersten Zyklus, wobei die erste Zeitdauer größer oder gleich einer Zeitdauer ist, die erforderlich ist, um den ersten Zyklus abzuschließen.

4. Verfahren nach Anspruch 3, wobei das Verfahren nach dem Schritt d ferner die folgenden Schritte umfasst: Beurteilen (S303), ob seit dem erstmaligen Beginn des ersten Zyklus eine zweite Zeitdauer erreicht worden ist, und wenn ja, Beenden des ersten Zyklus.

5. Verfahren nach Anspruch 1, wobei das Verfahren ferner den folgenden Schritt umfasst: Senden (S615) erster Informationen zu der zweiten Basisstation (120), wobei die ersten Informationen die vorgegebene Reihenfolge im Schritt b angeben.

6. Verfahren nach Anspruch 5, wobei das Verfahren ferner den folgenden Schritt umfasst: Senden (S616) zweiter Informationen zu der zweiten Basisstation (120), wobei die zweiten Informationen die mehreren Segmente, in die der gesamte Parameterversatzbereich unterteilt ist, und den Merkmalswert, der jedem Segment in der ersten Basisstation (120) zugewiesen ist, angeben.

7. Verfahren nach einem der vorhergehenden Ansprüche, wobei das Verfahren nach dem Schritt des Bestimmens des Versatzbereichs in Übereinstimmung mit der Kanalqualitätsangaberückmeldung ferner die folgenden Schritte umfasst: m. weiteres Unterteilen des bestimmten Versatzbereichs in mehrere Segmente in Übereinstimmung mit der geforderten Forderung der Kalibrierung und Zuweisen eines Merkmalswertes zu jedem Segment; n. Kompensieren von Aufwärtsstreckenkanal-Zustandsinformationen in Übereinstimmung mit dem Merkmalswert, der dem einen der mehreren Segmente zugewiesen worden ist, in einer vorgegebenen Reihenfolge in einem dritten Zyklus; o. Entwerfen eines Vorcodierungsvektors oder einer Vorcodierungsmatrix für eine Abwärtsstrecken-Datenübertragung in Übereinstimmung mit einem Vergleichsergebnis, Vorcodieren von Abwärtsstreckendaten und anschließend Übertragen der Abwärtsstreckendaten an ein Anwendergerät (130) in Zusammenwirkung mit der zweiten Basisstation (120), wobei das Anwendergerät (130) von der ersten Basisstation (110) und von der zweiten Basisstation (120) über eine koordinierte Mehrpunktübertragung bedient wird und wobei das Anwendergerät (130) momentan im Leerlauf ist; und p. Beurteilen, ob alle Segmente des Versatzbereichs durchlaufen worden sind, und dann, wenn ein Beurteilungsergebnis negativ ist, Wiederholen der Schritte n-p; oder dann, wenn das Beurteilungsergebnis positiv ist, Beenden des dritten Zyklus.

8. Verfahren nach Anspruch 1, wobei der erste Zyklus in einer kohärenten Zeitdauer abgeschlossen wird, wobei die kohärente Zeitdauer mit einer Geschwindigkeit des Anwendergeräts (130) und mit einer Frequenz eines Trägerfrequenzsignals in Beziehung steht.

9. Verfahren in einer zweiten Basisstation (120) eines drahtlosen Kommunikationsnetzes (100) zum Kalibrieren eines Versatzes einer Gruppenantenne in einer ersten Basisstation (110) in dem drahtlosen Kommunikationsnetz (100) relativ zu einer Gruppenantenne der zweiten Basisstation (120), wobei die erste Basisstation (110) und die zweite Basisstation (120) eine koordinierte Mehrpunktübertragung ausführen und wobei der gesamte Parameterversatz in mehrere Segmente in Übereinstimmung mit der geforderten Genauigkeit der Kalibrierung in der ersten Basisstation (110) unterteilt wird; und wobei das Verfahren die folgenden Schritte umfasst. A. in einem vierten Zyklus Entwerfen eines Vorcodierungsvektors oder einer Vorcodierungsmatrix für eine Abwärtsstreckenübertragung in Übereinstimmung mit Aufwärtsstreckenkanal-Zustandsinformationen, Vorcodieren von Abwärtsstreckendaten und anschließend Übertragen der Abwärtsstreckendaten an ein Anwendergerät (130) in Zusammenwirkung mit der ersten Basisstation (110), wobei das Anwendergerät (130) von der ersten Basisstation (110) und von der zweiten Basisstation (120) über eine koordinierte Mehrpunktübertragung bedient wird und wobei das Anwendergerät (130) momentan im Leerlauf ist; und B. Beurteilen, ob die Anzahl, in der der Schritt A wiederholt wird, eine vorgegebene Anzahl in Bezug auf die Anzahl der mehreren Segmente erreicht hat, wobei dann, wenn das Beurteilungsergebnis negativ ist, die Schritte A-B wiederholt werden, oder dann, wenn das Beurteilungsergebnis positiv ist, der vierte Zyklus beendet wird, wobei nach dem Schritt B das Verfahren ferner die folgenden Schritte umfasst: Empfangen einer zugehörigen Kanalqualitätsangaberückmeldung von dem Anwendergerät (130) und Bestimmen eines Versatzbereichs der Gruppenantenne der ersten Basisstation (110) relativ zu der Gruppenantenne der zweiten Basisstation (120) in Übereinstimmung mit der Kanalqualitätsangaberückmeldung, wobei der Schritt des Bestimmens des Versatzbereichs in Übereinstimmung mit der Kanalqualitätsangaberückmeldung die folgenden Unterschritte umfasst: Berechnen (S501) einer Statistik von Kanalqualitätsindikatoren für die jeweiligen Merkmalswerte zu einem momentanen Zeitpunkt; Bestimmen (S502) des Merkmalswertes, der dem höchsten Merkmalswert der Statistik entspricht; Berechnen (S503) für jeden Merkmalswert einer Wahrscheinlichkeit, dass der Merkmalswert ein Merkmalswert ist, der dem höchsten der Kanalqualitätsindikatoren zu einem bestimmten Zeitpunkt entspricht; und Bestimmen (S504) eines Parameterversatzbereichs, der dem Merkmalswert mit der höchsten Wahrscheinlichkeit entspricht.

**10.** Verfahren nach Anspruch 9, wobei das Verfahren nach dem Schritt B ferner die folgenden Schritte umfasst: in einem fünften Zyklus Beurteilen, ob seit dem Beginn des letzten vierten Zyklus eine dritte Zeitdauer erreicht worden ist, und wenn ja, erneutes Beginnen des vierten Zyklus, wobei die dritte Zeitdauer größer oder gleich einer Zeitdauer ist, die erforderlich ist, um den vierten Zyklus abzuschließen

**11.** Verfahren Anspruch 10, wobei nach dem Schritt B das Verfahren ferner die folgenden Schritte umfasst: Beurteilen, ob seit dem erstmaligen Beginn des vierten Zyklus eine vierte Zeitdauer erreicht worden ist, und wenn ja, Beenden des fünften Zyklus.

**12.** Verfahren Anspruch 10, wobei das Verfahren ferner die folgenden Schritte umfasst: Empfangen erster Informationen von der ersten Basisstation (110), wobei die ersten Informationen eine vorgegebene Reihenfolge angeben, in der die erste Basisstation (110) die mehreren Segmente in einem ersten Zyklus in Koordination mit dem vierten Zyklus der zweiten Basisstation (120) durchläuft; oder Vorkonfigurieren der ersten Informationen in der zweiten Basisstation (120); und Empfangen zweiter Informationen von der ersten Basisstation (110), wobei die zweiten Informationen die mehreren Segmente angeben, in die der gesamte Parameterversatzbereich unterteilt wird, und eines Merkmalswerts, der jedem Segment zugewiesen wird, in der ersten Basisstation (110); oder Vorkonfigurieren der zweiten Informationen in der zweiten Basisstation (120).

**Revendications**

**1.** Procédé de calibrage, dans une première station de base (110) d'un réseau de communication sans fil (100), d'un décalage d'un réseau d'antennes de la première station de base (110) par rapport à un réseau d'antennes d'une deuxième station de base (120) dans le réseau de communication sans fil (100), le procédé comprenant les étapes consistant à : a. diviser (S211) une plage de décalage de paramètre entière en une pluralité de segments selon la précision de calibrage nécessaire et attribuer une valeur de particularité pour chaque segment ; b. compenser (S412) des informations d'état de canal de liaison montante selon la valeur de particularité attribuée à l'un de la pluralité de segments dans un ordre prédéterminé dans un premier cycle ; c. concevoir (S413) un vecteur ou une matrice de précodage pour une transmission de données de liaison descendante selon un résultat de compensation, précoder des données de liaison descendante et transmettre ultérieurement des données de liaison descendante à un équipement utilisateur (130) en coopération avec la deuxième station de base (120), dans lequel l'équipement utilisateur (130) est desservi par la première station de base (110) et la deuxième station de base (120) par une transmission coordonnée multipoint et l'équipement utilisateur (130) est actuellement inactif ; et d. évaluer (S415) si tous les segments de la plage de décalage de paramètre ont été parcourus, et si un résultat d'évaluation est négatif, alors répéter les étapes b à d ; ou si le résultat d'évaluation est positif, alors terminer le premier cycle le procédé comprenant en outre, après l'étape d, les étapes consistant à : - recevoir un retour d'indication de qualité de canal associé de l'équipement utilisateur (130) ; et - déterminer une plage de décalage du réseau d'antennes de la première station de base (110) par rapport au réseau d'antennes de la deuxième station de base (120) selon le retour d'indication de qualité de canal, dans lequel l'étape consistant à déterminer la plage de décalage selon le retour d'indication de qualité de canal comprend les sous-étapes consistant à : - calculer (S501) des statistiques d'indicateurs de qualité de canal pour les valeurs de particularité respectives à un instant actuel ; - déterminer (S502) la valeur de particularité correspondant à la plus élevée des statistiques ; - calculer (S503) pour chaque valeur de particularité une probabilité que la valeur de particularité soit une valeur de particularité correspondant au plus élevé des indicateurs de qualité de canal à un instant spécifique ; et - déterminer (S504) une plage de décalage de paramètre correspondant à la valeur de particularité avec la probabilité la plus élevée.

**2.** Procédé selon la revendication 1, dans lequel l'ordre prédéterminé est destiné à faire parcourir au moins une fois chacun de la pluralité de segments.

**3.** Procédé selon la revendication 1, le procédé comprenant en outre, après l'étape d, les étapes consistant à : - dans un deuxième cycle, évaluer (S305) si une première période a été atteinte après que le dernier premier cycle a été démarré, et si oui, alors redémarrer le premier cycle, la première période étant supérieure ou égale à une période nécessaire pour achever le premier cycle.

**4.** Procédé selon la revendication 3, le procédé comprenant en outre, après l'étape d, les étapes consistant à : - évaluer (S303) si une deuxième période a été atteinte après que le premier cycle a été démarré pour la première fois, et si oui, alors terminer le premier cycle.

**5.** Procédé selon la revendication 1, le procédé comprenant en outre l'étape consistant à : - envoyer (S615) des premières informations à la deuxième station de base (120), les premières informations indiquant l'ordre prédéterminé à l'étape b.

**6.** Procédé selon la revendication 5, le procédé comprenant en outre l'étape consistant à : - envoyer (S616) des deuxièmes informations à la deuxième station de base (120), les deuxièmes informations indiquant la pluralité de segments en lesquels la plage de décalage de paramètre entière est divisée et la valeur de particularité attribuée pour chaque segment dans la première station de base (110).

**7.** Procédé selon l'une quelconque des revendications précédentes, le procédé comprenant en outre, après l'étape de détermination de la plage de décalage selon le retour d'indication de qualité de canal, les étapes consistant à : m. diviser encore la plage de décalage déterminée en une pluralité de segments selon la nécessité de calibrage nécessaire et attribuer une valeur de particularité pour chaque segment ; n. compenser des informations d'état de canal de liaison montante selon la valeur de particularité attribuée à l'un de la pluralité de segments dans un ordre prédéterminé dans un troisième cycle ; o. concevoir un vecteur ou une matrice de précodage pour une transmission de données de liaison descendante selon un résultat de compensation, précoder des données de liaison descendante et transmettre ultérieurement les données de liaison descendante à un équipement utilisateur (130) en coopération avec la deuxième station de base (120), dans lequel l'équipement utilisateur (130) est desservi par la première station de base (110) et la deuxième station de base (120) par une transmission coordonnée multipoint et l'équipement utilisateur (130) est actuellement inactif ; et p. évaluer si tous les segments de la plage de décalage de paramètre ont été parcourus, et si un résultat d'évaluation est négatif, alors répéter les étapes n à p ; ou si le résultat d'évaluation est positif, alors terminer le troisième cycle.

**8.** Procédé selon la revendication 1, dans lequel le premier cycle est achevé dans une période cohérente, la période cohérente étant liée à une vitesse de l'équipement utilisateur (130) et à une fréquence d'un signal de fréquence de porteuse.

**9.** Procédé de calibrage, dans une deuxième station de base (120) d'un réseau de communication sans fil (100), d'un décalage d'un réseau d'antennes d'une première station de base (110) dans le réseau de communication sans fil (100) par rapport à un réseau d'antennes de la deuxième station de base (120), dans lequel la première station de base (110) et la deuxième station de base (120) effectuent une transmission coordonnée multipoint, et une plage de décalage de paramètre entière est divisée en une pluralité de segments selon la précision de calibrage nécessaire dans la première station de base (110) ; et le procédé comprend les étapes consistant à : A. dans un quatrième cycle, concevoir un vecteur ou une matrice de précodage pour une transmission de liaison descendante selon des informations d'état de canal de liaison montante, précoder des données de liaison descendante, et transmettre ultérieurement les données de liaison descendante à un équipement utilisateur (130) en coopération avec la première station de base (110), dans lequel l'équipement utilisateur (130) est desservi par la première station de base (110) et la deuxième station de base (120) par une transmission coordonnée multipoint, et l'équipement utilisateur (130) est actuellement inactif ; et B. évaluer si le nombre de fois que l'étape A est répétée a atteint un nombre de fois prédéterminé lié au nombre de la pluralité de segments, et si un résultat d'évaluation est négatif, alors répéter les étapes A à B, ou si le résultat d'évaluation est positif, alors terminer le quatrième cycle, le procédé comprenant en outre, après l'étape B, les étapes consistant à recevoir un retour d'indication de qualité de canal associé de l'équipement utilisateur (130) et - déterminer une plage de décalage du réseau d'antennes de la première station de base (110) par rapport au réseau d'antennes de la deuxième station de base (120) selon le retour d'indication de qualité de canal, dans lequel l'étape de détermination de la plage de décalage selon le retour d'indication de qualité de canal comprend les sous-étapes consistant à : - calculer (S501) des statistiques d'indicateurs de qualité de canal pour les valeurs de particularité respectives à un instant actuel ; - déterminer (S502) la valeur de particularité correspondant à la plus élevée des statistiques ; - calculer (S503) pour chaque valeur de particularité une probabilité que la valeur de particularité soit une valeur de particularité correspondant au plus élevé des indicateurs de qualité de canal à un instant spécifique ; et - déterminer (S504) une plage de décalage de paramètre correspondant à la valeur de particularité avec la probabilité la plus élevée.

**10.** Procédé selon la revendication 9, le procédé comprenant en outre, après l'étape B, les étapes consistant à : - dans un cinquième cycle, évaluer si une troisième période a été atteinte après que le dernier quatrième cycle a été démarré, et si oui, alors redémarrer le quatrième cycle, la troisième période étant supérieure ou égale à une période nécessaire pour achever le quatrième cycle.

**11.** Procédé selon la revendication 10, le procédé comprenant en outre, après l'étape B, les étapes consistant à : -

évaluer si une quatrième période a été atteinte après que le quatrième cycle a été démarré pour la première fois, et si oui, alors terminer le cinquième cycle.

12. Procédé selon la revendication 9, le procédé comprenant en outre les étapes consistant à : - recevoir des premières informations de la première station de base (110), les premières informations indiquant un ordre prédéterminé dans lequel la première station de base (110) passe par la pluralité de segments dans un premier cycle coordonné avec le quatrième cycle de la deuxième station de base (120) ; ou préconfigurer les premières informations dans la deuxième station de base (120) ; et - recevoir des deuxièmes informations de la première station de base (110), dans lequel les deuxièmes informations indiquent la pluralité de segments en lesquels la plage de décalage de paramètre entière est divisée et une valeur de particularité attribuée pour chaque segment dans la première station de base (110) ; ou préconfigurer les deuxièmes informations dans la deuxième station de base (120) .

Base station
110

Base station
120

User equipment
130

Fig.1

First base station
110

User equipment
130

Second base station
120

S211

Divide a whole parameter offset range into a plurality of segments and assign a feature value for each segment

S212

Second cycle

Pre-coded downlink data

S213

Pre-coded downlink data

S222

Fifth cycle

S221

S214

Channel quality indication feedback

Channel quality indication feedback

S223

Determine an offset range of the antenna array of the first base station relative to the antenna array of the second base station according to the channel quality indicator feedback

S215

Fig.2

Start a second
(fifth) cycle — S301

First (fourth) cycle — S302

Has a second period been
reached after the first (fourth)
cycle was started for the first
time? — S303

Yes

End the second (fifth)
cycle — S304

No

Has a first period been reached
after the last first (fourth) cycle
was started? — S305

No

Yes

Fig.3

EP 2 885 881 B1

First base station
110

User equipment
130

Second base station
120

S411

Start a first
cycle

S421

Start a fourth
cycle

S412

Compensate uplink
channel state
information according
to the feature value
assigned to one of the
plurality of segments in
a predetermined order

S413

Design a pre-coding vector
or matrix for downlink data
transmission according to a
compensation result and
pre-code downlink data

S422

Design a pre-coding
vector or matrix for
downlink transmission
according to uplink
channel state
information and pre-
codes downlink data

S414

Pre-coded downlink
data

S423

Pre-coded downlink
data

S415

No

Have all the segments of
the parameter offset range
been traversed?

S424

Has the number of times of
being repeated reached a
predetermined number of
times related to the number
of segments?

No

Yes

S416

End the first
cycle

Yes

S424

End the fourth
cycle

Fig.4

Calculate statistics of
channel quality indicators
for the respective feature
values at a current instant
— S501

Determine the feature
value corresponding to the
highest one of the
calculated statistics
— S502

Calculate for each feature
value a probability that the
feature value is a feature
value corresponding to the
highest one of channel
quality indicators at a
specific instant
— S503

Determine a parameter
offset range corresponding
to the feature value with
the highest probability
— S504

Fig.5

First base station
110

User equipment
130

Second base station
120

S611

Divide a whole
parameter offset range
into a plurality of
segments and assign a
feature value for each
segment

S612

Second cycle

Pre-coded
downlink data
S613

Pre-coded
downlink data
S622

S621

Fifth cycle

S614

Channel quality
indication feedback

S623

Channel quality
indication feedback

S615    First
information

S616    Second
information

S624

Determine an offset range
of the antenna array of the
first base station relative to
the antenna array of the
second base station
according to the channel
quality indicator feedback

Fig.6

**EP 2 885 881 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012020312 A